# FASCICULE DE BREVET EUROPEEN

(11) **EP 1 259 442 B1**
(45) Date de publication et mention de la délivrance du brevet: **09.11.2005**
(21) Numéro de dépôt: 01907804.7
(22) Date de dépôt: 14.02.2001
(51) Int. Cl.: B65G 47/84, B65G 29/00

(54) **DISPOSITIF DE TRANSFERT DE RECIPIENTS COMPORTANT UNE ROUE DE GUIDAGE A GEOMETRIE VARIABLE**
VORRICHTUNG ZUR ÜBERGABE VON BEHÄLTERN MIT EINEM FÜHRUNGSRAD VARIABLER GEOMETRIE
DEVICE FOR TRANSFERRING CONTAINERS COMPRISING A GUIDE WHEEL WITH VARIABLE GEOMETRY

(30) Priorité: 21.02.2000 FR 0002080
(43) Date de publication de la demande: 27.11.2002
(73) Titulaire: SIDEL, 76053 Le Havre Cedex (FR)
(72) Inventeur: Stocchi, Gabriele, F-76053 Le Havre Cedex (FR)
(74) Mandataire: Siloret, Patrick
(86) Numéro de dépôt international: PCT/FR2001/000444
(87) Numéro de publication internationale: WO 2001/062636

(56) Documents cités:
- EP-A- 0 629 569
- WO-A-97/45347
- DE-A- 2 623 309
- JP-A- 61 211 220
- US-A- 5 613 593
- US-A- 5 826 400

## Description

L'invention se rapporte au domaine des dispositifs de transfert qui sont utilisés notamment dans les lignes de fabrication, de traitement, de remplissage et de conditionnement de récipients. Plus particulièrement, il s'agit de dispositifs de transferts dans lesquelles les récipients sont pris en charge individuellement avec un espacement ou pas prédéterminé.

L'invention trouvera notamment application dans les lignes d'embouteillages telles que les lignes d'embouteillage de bouteilles plastiques.

De manière plus précise, l'invention sera décrite dans une application de transfert de bouteilles en polyéthylène téréphtalate (PET) qui sont susceptibles d'être transportées par le col.

Souvent, sur une même ligne de conditionnement, on souhaite pouvoir utiliser plusieurs types de récipients, ces récipients variant notamment par leur format.

Dans le cas des bouteilles en PET, on privilégie le maniement des bouteilles par le col car on peut concevoir des bouteilles de formats différents possédant sensiblement le même col de telle sorte que, du point de vue du support des bouteilles, il n'y a pas de modification à effectuer sur la ligne lorsque l'on change de format de bouteilles. Cette disposition permet notamment de s'affranchir de tout réglage en hauteur.

Cependant, dans le transfert des récipients, il faut aussi prévoir des moyens de guidage qui permettent d'assurer un bon maintien en position des récipients tout au long de leur transfert.

Ainsi, il est connu de transférer les bouteilles en PET sur des roues de transfert animées d'un mouvement de rotation continu (ou éventuellement séquentiel) autour de leur axe. Sur un tel dispositif de transfert, les bouteilles suivent donc une trajectoire en arc de cercle entre leurs points de chargement et de déchargement sur la roue. Tout au long de ce transfert, les bouteilles sont soumises à diverses forces d'accélération et de décélératicn, tant tangentielles que radiales.

Lorsque les bouteilles sont suspendues par leur col, elles risquent d'être déstabilisées par ces forces, d'où la nécessité de prévoir des moyens de guidage du corps des bouteilles.

Aussi, dans les dispositifs de transferts connus jusqu'à ce jour, les roues de transfert comportent, en plus de la roue à encoches qui supporte les récipients, une roue de guidage. Cette roue de guidage est généralement réalisée sous la forme d'une plaque, éventuellement en matière plastique, dont le contour externe circulaire présente, à intervalles réguliers correspondant au pas qui sépare les récipients, des alvéoles qui sont aménagées en creux radialement vers l'intérieur pour caler les récipients. Bien entendu, pour éviter tout ballottement des récipients, la forme et la dimension des alvéoles doivent être adaptées à la forme du corps des récipients. Or, si les cols des récipients sont souvent standardisés, il ne peut évidemment en être de même pour leurs corps.

Aussi, généralement, un changement de format de bouteilles nécessite de changer les plaques de guidages de chacune des roues de transfert de la ligne. Une telle opération nécessite de prévoir autant de jeu de plaques qu'il y a de formats de bouteilles différents et, surtout, elle augmente le temps d'arrêt de la ligne lors du changement de format, ce qui est très pénalisant en termes de coûts.

Ce problème ne se pose pas uniquement dans le cas du transfert de bouteilles suspendues par leur col. On le retrouve de manière générale dans le transfert de tous types de récipients, y compris lorsqu'ils sont supportés par leur fond.

Le document EP A 0 629 569 présente un dispositif de transfert pouvant être adapté à différents formats de récipients susceptibles d'être transférés par le dispositif, grace à la présence d'alvéoles de largeur réglable pour la prise en charge des récipients. Toutefois, ce dispositif présente l'inconvénient de faire apparaître des "fausses alvéoles" dans lesquelles, dans certaines conditions, des récipients peuvent être pris en charge alors que ceci n'est pas souhaité.

L'invention a donc pour but de proposer une nouvelle conception des moyens de guidage dans les dispositifs de transfert de récipients, ces nouveaux moyens devant pouvoir être adaptés très rapidement aux différents formats de récipients susceptibles d'être transférés par le dispositif, qui ne présente pas les inconvénients du dispositif décrit dans le document EP A 0 629 569.

Dans ce but, l'invention propose un dispositif de transfert de récipients, du type dans lequel les récipients sont transférés sur une trajectoire en arc de cercle autour d'un axe central du dispositif de transfert, du type dans lequel le dispositif comporte au moins une roue de support et une roue de guidage qui sont animées du même mouvement de rotation autour de l'axe du dispositif, et du type dans lequel la roue de guidage présenté, à sa périphérie, des alvéoles qui sont aménagées radialement en creux par rapport à un cercle d'enveloppe externe de la roue de guidage, et la roue de guidage comporte deux plateaux concentriques superposés, chaque plateau étant muni d'une série de dents en saillie radiale vers l'extérieur, chaque dent comportant un bord gauche et un bord droit, en ce que chaque alvéole de la roue de guidage est délimitée en largeur par le bord gauche d'une dent d'un premier des deux plateaux et par le bord droit d'une dent du second des deux plateaux, et, en faisant varier la position angulaire relative des deux plateaux autour de leur axe, on fait varier simultanément la largeur de toutes les alvéoles de la roue de guidage de façon à adapter la dimension des alvéoles à là dimension des récipients à transférer, caractérisé en ce que chacune des dents des deux plateaux comporte deux tendeurs qui sont disposés l'un en tête de dent, l'autre en pied de dent, et qui sont disposés le long du bord de la dent qui sert à délimiter une alvéole, et la roue de guidage comporte une courroie qui est tendue sur les tendeurs de manière à suivre sensiblement le cercle d'enveloppe entre deux alvéoles ;

Selon d'autres caractéristiques de l'invention :
- la courroie est extensible pour s'adapter à la variation de longueur du parcours délimité par les tendeurs lorsque les deux plateaux sont déplacés l'un par rapport à l'autre pour faire varier la largeur des alvéoles ;
- les récipients sont en appui sur la courroie ;
- lors d'une opération de changement de largeur des alvéoles, les deux plateaux sont décalés angulairement chacun d'une même valeur angulaire selon les deux sens opposés de telle sorte que la position globale des alvéoles sur la roue de guidage ne varie pas ;
- chaque plateau est pourvu d'une lumière qui s'étend en arc de cercle autour de l'axe du dispositif, les lumières des deux plateaux étant prévues pour être disposées axialement l'une en regard de l'autre, la lumière d'un des deux plateaux est pourvue d'une crémaillère sur son bord radial interne tandis que la lumière de l'autre plateau est pourvue d'une crémaillère sur son bord radial externe, et le dispositif comporte un pignon de commande qui est engagé axialement dans les lumières de manière à coopérer simultanément d'un côté avec la crémaillère agencée sur le bord radial interne, et de l'autre côté avec la crémaillère agencée sur le bord radial externe, ce par quoi une rotation du pignon autour de son axe provoque un déplacement angulaire de chacun des deux plateaux d'une même valeur angulaire mais selon des sens opposés autour de l'axe du dispositif ;
- la roue de support est une roue qui est apte à saisir les récipients au niveau de leur extrémité ouverte, et la roue de guidage coopère avec le corps des récipients ; et
- le dispositif comporte une seconde roue de guidage qui est prévue pour coopérer avec le fond des récipients, et la dite seconde roue est ajustable en hauteur et comporte une surface de contact en entonnoir contre laquelle le fond des récipients vient en appui radialement vers l'extérieur.

D'autres caractéristiques et avantages de l'invention apparaîtront à la lecture de la description détaillée qui suit ainsi que dans les dessins annexés dans lesquels :
- la figure 1 est une vue schématique en coupe axiale d'un dispositif de transfert conforme aux enseignements de l'invention, le dispositif étant configuré pour transférer un premier format de bouteilles ;
- la figure 2 est une vue similaire à celle de la figure 1, le dispositif étant configuré pour transférer un second format de bouteilles ;
- les figures 3 et 4 sont des vues en plan, de dessus, de chacun des deux plateaux de la roue de guidage ;
- les figures 5 et 6 sont des vues de dessus des deux plateaux superposés, représentés dans deux positions angulaires relatives différentes ;
- les figures 7, 8 et 9 sont des vues schématiques en perspective illustrant le montage de la roue de guidage selon l'invention ;
- les figures 10 et 11 sont vues partielles de dessus illustrant deux configurations possibles de la roue de guidage ; et
- la figure 12 est une vue partielle agrandie de la figure 1 illustrant plus particulièrement les moyens de fixation de la roue de guidage sur la roue de support.

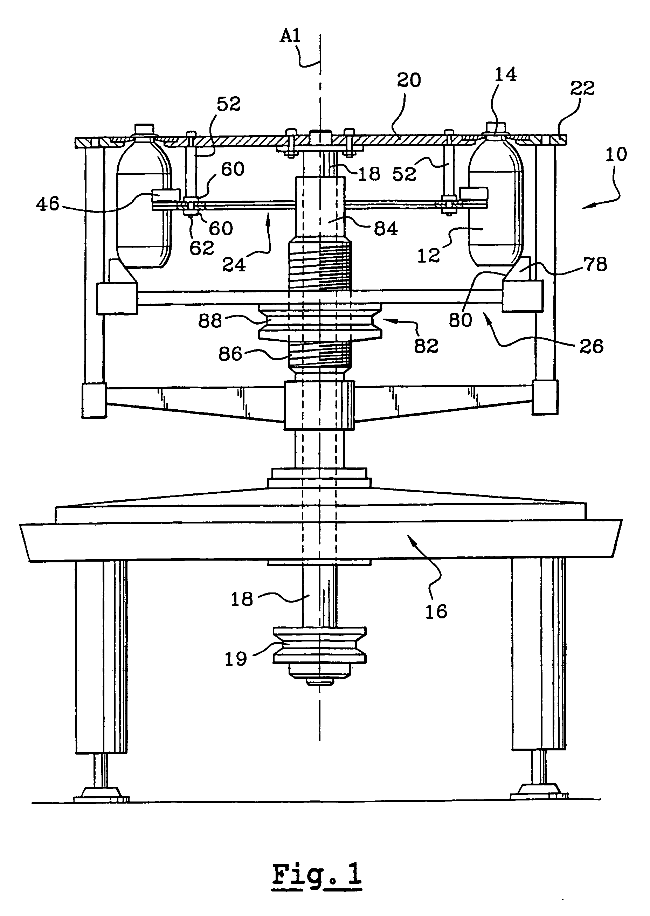

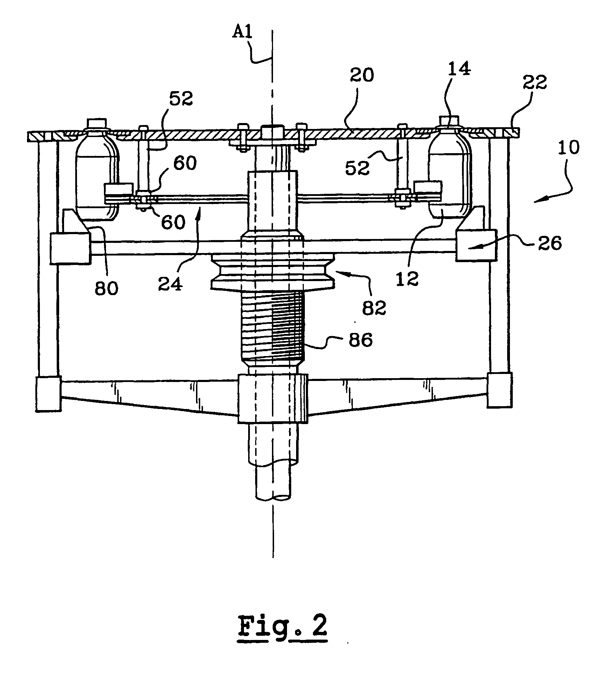

On a illustré sur les figures 1 et 2 une vue schématique générale d'un dispositif de transfert 10 conforme aux enseignements de l'invention. Il s'agit en l'occurrence d'une roue de transfert qui est apte à transporter des bouteilles 12 par leur col 14. Les bouteilles 12 sont par exemple des bouteilles en polyéthylène téréphtalate (PET) dont le col 14 comporte une collerette radiale externe par laquelle elles peuvent être supportées, à la fois quand elles sont vides et quand elles sont pleines.

La roue de transfert 10 comporte, monté sur une table fixe 16, un carrousel rotatif d'axe A1 vertical. Le carrousel comporte un arbre principal 18 qui est guidé en rotation autour de son axe A1 dans un fût 84 et dont l'extrémité inférieure dépasse en dessous de la table 16 et comporte une poulie d'entraînement 19 sur laquelle est destinée à s'enrouler une courroie (non représentée) entraînée par un moteur. L'arbre principal 18 est ainsi entraîné en rotation de manière continue autour de son axe A1. A son extrémité supérieure, l'arbre 18 comporte une roue de support 20 qui est réalisée par exemple sous la forme d'un disque circulaire d'axe A1 muni à sa périphérie d'encoches semi-circulaires espacées angulairement de manière régulière. La roue de transfert comporte encore un guide externe fixe 22 qui s'étend en arc de cercle autour de la roue de support 22 sur un arc compris entre les points de chargement et de déchargement des bouteilles sur la roue 20. Ainsi, il est prévu que, au niveau du point de chargement, les bouteilles 12 sont amenées selon une trajectoire tangentielle à la roue de manière à être engagées par leur col dans une encoche de la roue de support pour être entraînée en rotation par la roue de support 20. Chaque bouteille ainsi prise en charge se retrouve alors engagée radialement par son col entre la roue de support 20 et le guide externe 22. La bouteille est alors en appui par sa collerette radiale externe à la fois sur la roue de support 20 qui l'entraîne et sur le guide fixe 22 sur lequel elle glisse. Dans tous les cas, la bouteille est parfaitement soutenue par son col et ne peut se dégager de son encoche.

Toutefois, si la bouteille n'était pas maintenue par ailleurs, elle pourrait se balancer par rapport à son point de support. Aussi, la roue de transfert 10 comporte deux organes de guidages complémentaires : une roue de guidage 24 qui coopère avec le corps des bouteille, et qui bloque à elle seule tout mouvement tangentiel de la bouteille, et une couronne de guidage inférieure 26 qui, en combinaison avec la roue de guidage 24, bloque tout ballottement radial des bouteilles.

Selon un premier aspect de l'invention, la roue de guidage 24 est prévue pour pouvoir s'adapter à différents formats de bouteilles 12, ces formats différant notamment par le diamètre du corps des bouteilles.

En effet, la roue de guidage 24 se présente de manière globale sous la forme d'un disque d'axe A1 qui est solidaire en rotation de la roue de support 20 et qui est muni, à sa périphérie, d'alvéoles 28 prévues pour recevoir et immobiliser le corps d'une bouteille. Bien entendu, les alvéoles 28 sont agencées en correspondance avec les encoches de la roue de support 20.

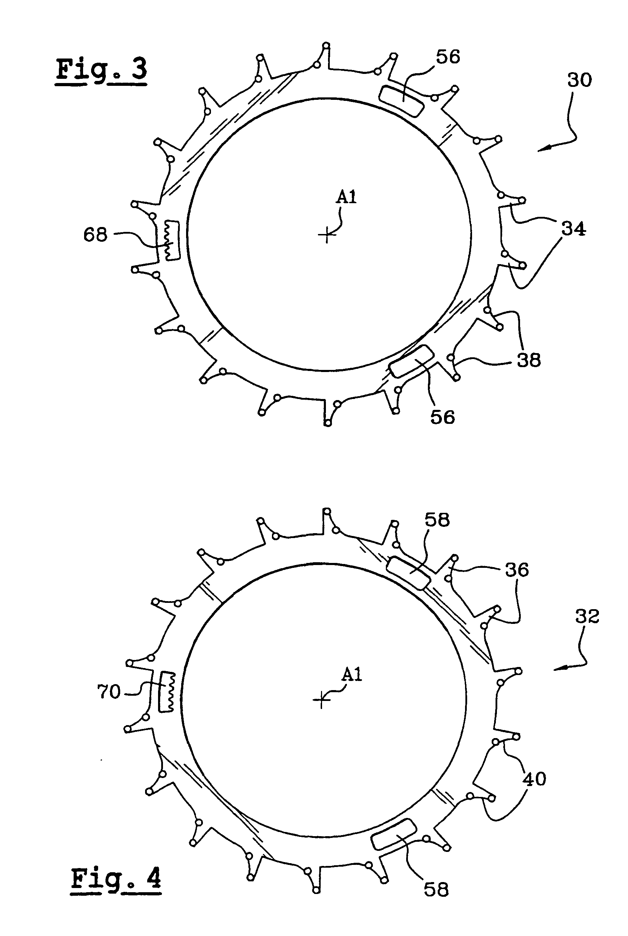

Selon l'invention, la roue de guidage 24 est formée pour l'essentiel par deux plateaux annulaires 30, 32 d'axe A1 qui sont superposés et qui, comme on peut le voir sur les figures 3 et 4, sont pourvus de dents 34, 36 en saillie radialement vers l'extérieur. Selon l'invention, lorsque les deux plateaux 30, 32 sont superposés, ils délimitent, entre leurs dents 34, 36, les alvéoles 28. Ainsi, en vue de dessus, chaque alvéole est délimitée en largeur d'un côté par le bord gauche 38 d'une dent d'un premier 30 des deux plateaux, et, de l'autre côté, par le bord droit 40 d'une dent 36 du second 32 des deux plateaux. Ainsi, par souci de simplicité, on appellera dans la suite du texte "plateau gauche" le plateau 30 dont les dents 34 délimitent les alvéoles par leur bord gauche 38, et "plateau droit" celui 32 dont les dents 36 délimitent les alvéoles 28 par leur bord droit 40. Les notions de droite et de gauche concernant les bords des dents 34, 36 doivent s'entendre comme vu depuis l'axe A1.

Dans l'exemple illustré, les dents 34, 36 des deux plateaux ne sont pas symétriques. On peut voir en effet que leur bord actif 38, 40 est courbe, de manière à laisser subsister plus de matière en pied de dent, tandis que leur autre bord est sensiblement rectiligne et orienté selon un rayon passant par l'axe A1. Les deux plateaux 30, 32 ne sont donc pas identiques.

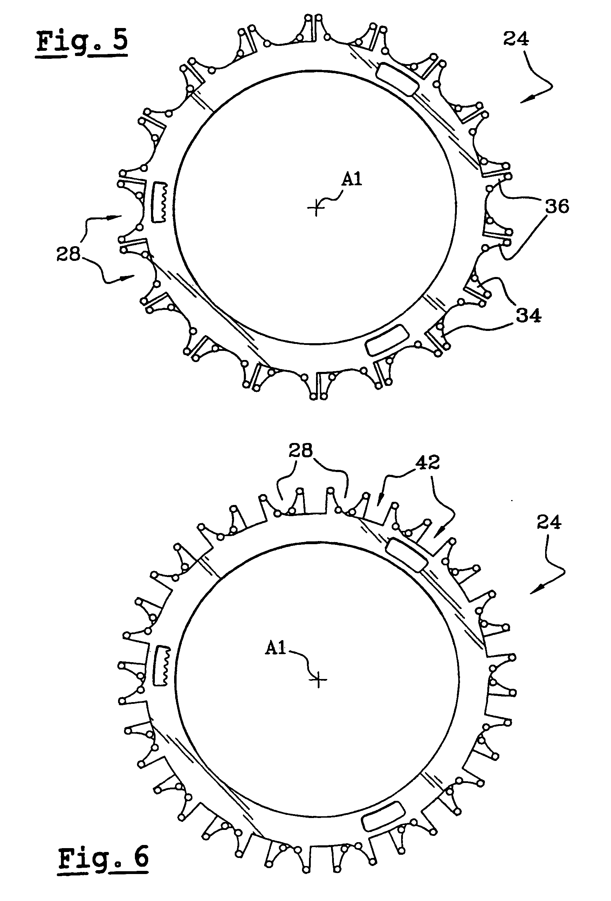

Comme on peut le voir sur les figures 5 et 6, la largeur des alvéoles 28, selon la direction tangentielle, varie en fonction de la position angulaire relative des deux plateaux 30, 32. Dans la configuration de la figure 6, les alvéoles présentent un faible largeur tandis que dans celle de la figure 5, les alvéoles 28 présentent sensiblement leur largeur maximale. Le dispositif qui permet de régler la position angulaire relative des deux plateaux 30, 32 sera décrit plus loin.

Ainsi, avec un roue de guidage à deux plateaux, on peut adapter facilement la largeur des alvéoles 28 à la dimension des récipients à transférer pour en assurer un guidage parfait.

Cependant, une telle roue de guidage peut, dans certaines conditions, ne pas donner entièrement satisfaction. En effet, on voit que la largeur des dents 34, 36, au niveau de leur tête, est limitée pour que les plateaux puissent être utilisés avec des bouteilles ayant un corps de grande largeur. Or, lorsque ces mêmes plateaux 30, 32 sont utilisés avec des petites bouteilles, on voit sur la figure 6 que les dents laissent subsister, entre les alvéoles 28, des "fausses alvéoles" 42 relativement larges. Or, au niveau du chargement des récipients sur la roue de transfert 10, il peut arriver que les récipients se présentent avec un inclinaison non négligeable. Un tel risque existe notamment lorsque le convoyage des bouteilles est assuré jusqu'à la roue de transfert considérée par un convoyeur à air. Dans ce cas, il se peut qu'un récipient soit engagé par son col dans une encoche de la roue de support mais que, du fait de son inclinaison, son corps vienne s'engager non pas dans l'alvéole correspondante 28 de la roue de guidage 24 mais, de l'autre côté de l'une des dents 34, 36, dans une "fausse alvéole" 42. Bien entendu, un tel cas aboutira presque à coup sûr à un bourrage et à un arrêt de l'installation.

Selon un autre aspect de l'invention, il est donc prévu des moyens qui permettent donc d'éviter qu'un récipient ne vienne s'engager dans une "fausse alvéole" 42.

Pour cela, on peut voir que chacune des dents 34, 36 comporte deux galets tendeurs 44 qui sont agencés respectivement aux deux extrémités de son bord actif 38, 40, l'un en tête de dent et l'autre en pied de dent. De la sorte, lorsque les deux plateaux 30, 32 sont superposés, chaque alvéole est délimitée par quatre tendeurs 44.

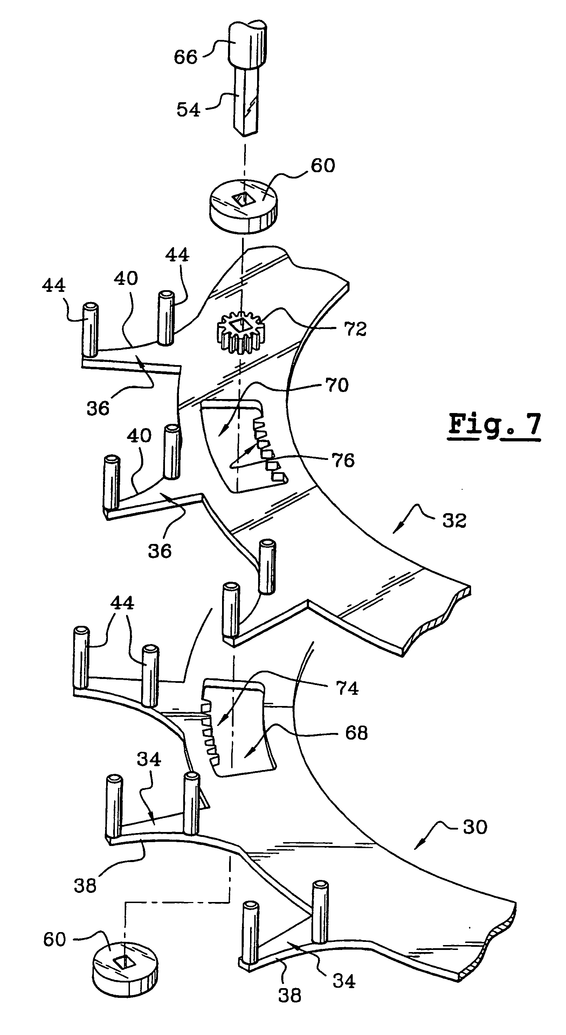

Comme on peut le voir sur les figures 7 à 9, les tendeurs sont réalisés sous la forme de tiges cylindriques d'axe parallèle à l'axe des plateaux. Dans l'exemple illustré, les tendeurs 44 sont orientés verticalement vers le haut, et, de préférence, les tendeurs 44 qui sont portés par le plateau inférieur sont plus longs que ceux portés par le plateau supérieur afin que tous les tendeurs atteignent sensiblement le même niveau.

En effet, ces tendeurs sont prévus pour permettre l'enroulement d'une courroie 46 qui est destinée à faire le tour de la roue de guidage. La courroie 46 est enroulée radialement vers l'extérieur sur les tendeurs situées en tête de dent et vers l'intérieur sur les tendeurs situés en pied de dent. De la sorte, entre chaque alvéole, la courroie 46 suit sensiblement le cercle d'enveloppe des dents 34, 36 (il s'agit en fait, entre deux dents, d'un segment de tête 47 rectiligne reliant deux tendeurs de tête de dents), et, au niveau de chaque alvéole, la courroie 46 suit sensiblement le profil de l'alvéole. En réalité, au niveau de chaque alvéole, la courroie forme une pseudo-alvéole avec deux segments latéraux 48 qui correspondent sensiblement au deux bords latéraux 38, 40 de l'alvéole 28 et avec, entre les deux segments latéraux, un segment de fond 50 qui est sensiblement tangent au cercle de pied des dents 34, 36.

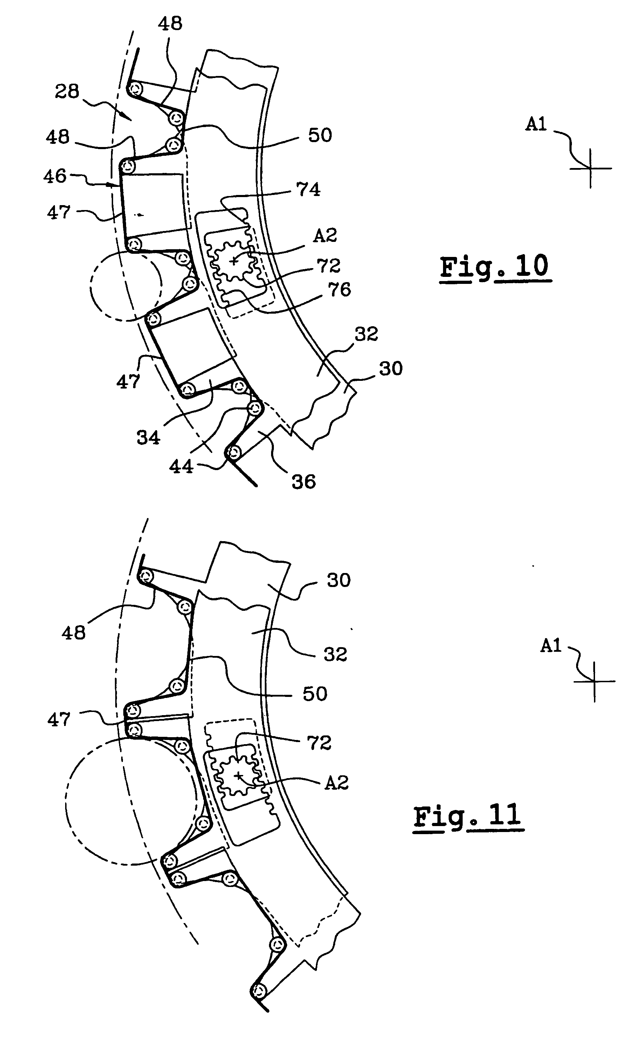

Lorsque les plateaux sont déplacés angulairement l'un par rapport à l'autre, comme illustré entre les figures 10 et 11, les deux dents 34, 36 qui délimitent une alvéole 28 ont tendance à s'écarter l'une de l'autre, ce qui tend à allonger la taille du segment de fond 50 de la pseudo-alvéole délimitée par la courroie 46. Mais, dans le même temps, chacune de ces deux dents se rapproche respectivement des dents qui délimitent les alvéoles adjacentes. Il en résulte que la longueur du segment de tête 47 de la courroie diminue. En fonction de la géométrie précise du positionnement des tendeurs, il se peut que la longueur totalé du parcours de la courroie 46 varie un peu si la diminution des segments de tête 47 ne compense pas exactement l'augmentation des segments de pied 50 de la courroie. Aussi, il est préférable d'utiliser une courroie qui possède une certaine capacité d'allongement, par exemple une courroie en polyuréthane.

De préférence, comme cela se voit sur les figures 10 et 11, la position exacte et le diamètre des tendeurs de tête sera choisie pour que les segments latéraux de la courroie 46 s'étendent en partie "dans le vide", en dehors de l'empreinte de dents. De la sorte, plutôt que de venir directement au contact des plateaux 30, 32, les récipients viendront en appui sur la courroie 46, ce qui limite les risques d'endommagement des récipients.

De préférence, les tendeurs de pieds de dents sont disposés de telle sorte que les segments latéraux 48 d'une même encoche ne sont pas parallèles entre eux mais présentent une disposition en V ouvert radialement vers l'extérieur. Ainsi, dans les deux exemples illustrés qui concernent des récipients cylindriques de révolution, on peut voir que le réglage des plateaux est choisi de telle sorte que la bouteille ne vienne en appui que par deux points sur la roue de guidage : sur les segments latéraux 48 de la courroie 46.

Pour la commande en rotation des deux plateaux 30, 32, il est prévu un dispositif qui permet de faire pivoter les deux plateaux simultanément d'une même valeur angulaire mais dans des sens opposés autour de l'axe A1. Ainsi, lors de l'adaptation dimensionnelle des alvéoles 28, celles-ci restent globalement immobiles par rapport aux encoches de la roue de support 20.

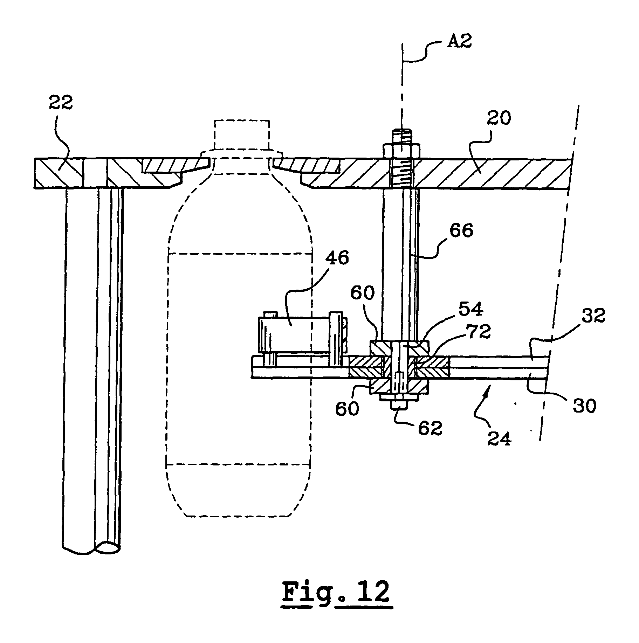

Comme on peut le voir sur les figures 1 et 12, la roue de guidage est suspendue en dessous de la roue de support 20 par l'intermédiaire de trois colonnes qui sont fixées par leur extrémité supérieure sur la roue de support 20. Dans l'exemple illustré, on peut distinguer deux colonnes de suspension 52 et une colonne de commande 66.

A leur extrémité inférieure, les colonnes 52, 66 présentent un tronçon 54 de diamètre rétréci qui est prévu pour s'étendre axialement au travers de lumières correspondantes 56, 58, 68, 70 aménagées dans les deux plateaux 30, 32. Les lumières 56, 58, 68, 70 sont aménagées en arc de cercle autour de l'axe A1 et possèdent donc sensiblement une forme de haricot.

Pour les colonnes de suspension 52, le diamètre des tronçons 54 correspond sensiblement à la largeur des lumières 56, 58 correspondantes. Deux rondelles 60 sont montées sur le tronçon 54, de part et d'autre des deux plateaux 30, 32 et une vis 62 est vissée dans l'extrémité inférieure du tronçon 54 de manière à retenir axialement vers le bas la rondelle 60 inférieure. Bien entendu, les rondelles 60 présentent un diamètre supérieur à largeur des lumières 56, 58. Ainsi, l'empilement formé par la rondelle inférieure, les plateaux 30, 32, et la rondelle supérieure se trouve emprisonné axialement entre la vis 62 et un épaulement 64 qui délimite le tronçon 54 vers le haut. On prévoit toutefois un léger jeu axial qui permettra le pivotement des plateaux autour de l'axe A1.

Quant à la troisième colonne de commande 66 qui est illustrée plus particulièrement sur les figures 7 à 9, on peut voir que son tronçon d'extrémité est de section prismatique pour pouvoir entraîner en rotation un pignon 72 dont la hauteur correspond sensiblement à l'épaisseur cumulée des deux plateaux. Le pignon 72 est destiné à être reçu à l'intérieur des lumières 68, 70 des deux plateaux 30, 32. Comme on peut le voir sur la figure 7, la lumière 68 du plateau 30 comporte un bord radial externe muni de dents pour former une première crémaillère 74. Concernant la lumière 70 de plateau 32, c'est son bord radial interne qui forme une seconde crémaillère 76.

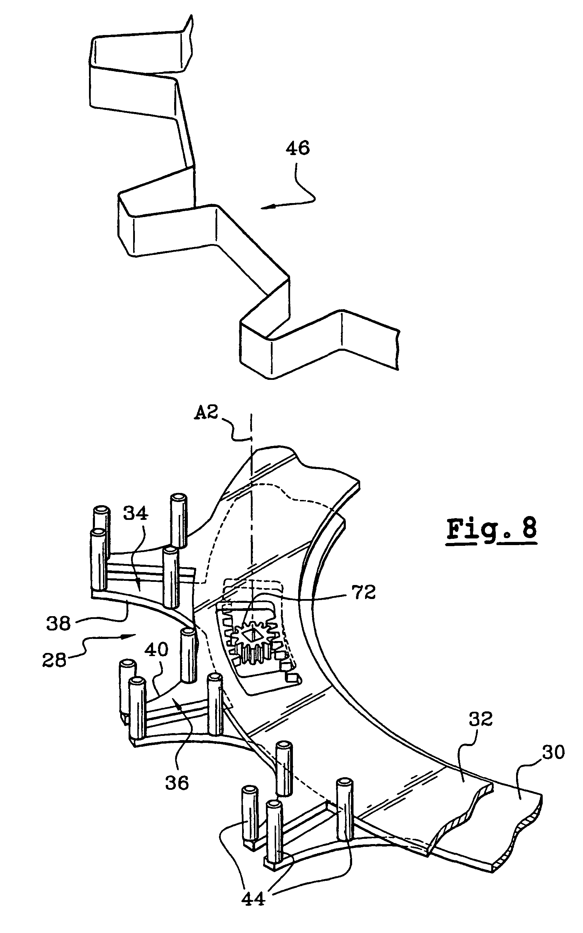

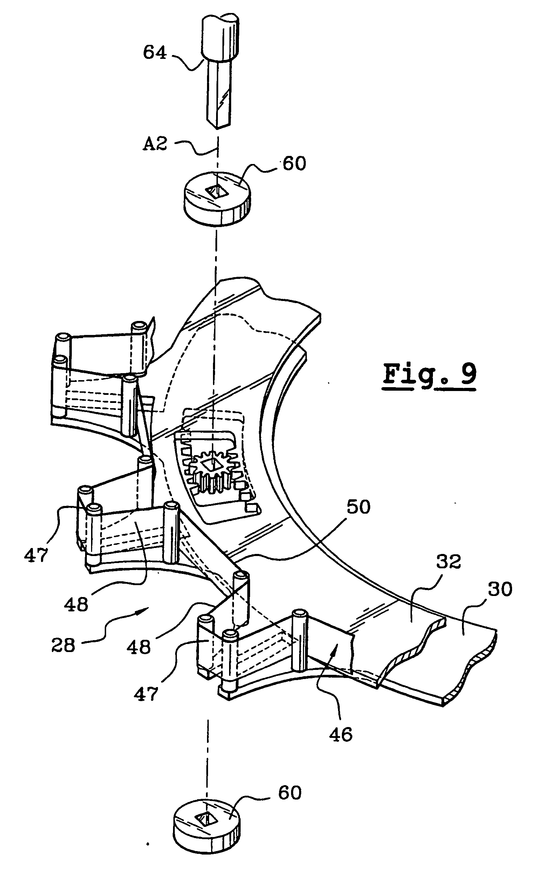

Le pignon 72, lorsqu'il est reçu à l'intérieur des lumières comme cela est illustré aux figures 8 et 9, coopère donc d'un côté avec la première crémaillère 74 pour entraîner l'un des plateaux selon un premier sens de rotation, et, simultanément, de l'autre côté avec la seconde crémaillère 76 pour entraîner l'autre plateau 32 selon le sens inverse.

Par ce dispositif, il est prévu de pouvoir entraîner en rotation la colonne de commande 66 en rotation autour de son axe A2, soit manuellement à l'aide d'une clé, soit par l'intermédiaire d'un moteur, ceci afin de provoquer la rotation du pignon 72 autour de son axe. La colonne étant fixée par son extrémité supérieure sur la roue de support avec uniquement une possibilité de rotation autour de son axe A2, le pignon reste globalement immobile par rapport à la roue de support. Aussi, lorsqu'on provoque la rotation du pignon 72 d'un angle déterminé autour de son axe A2, il entraîne en rotation les deux plateaux 30, 32 autour de leur axe A1, par l'intermédiaire des deux crémaillères 74, 76. Dans ce cas, l'angle de pivotement des deux plateaux est identique, mais ce pivotement se fait selon des sens opposés autour de l'axe A1.

Grâce à cette conception du dispositif d'entraînement, les deux plateaux s'écartant d'un même angle, les alvéoles s'agrandissent ou se rétrécissent sans que leur plan médian ne se déplace, de telle sorte que celui-ci reste à l'aplomb des encoches de la roue de support sans qu'il soit nécessaire de prendre des précautions particulières d'alignement lors des changements de format.

La colonne de commande 52 possède aussi une fonction de suspension des plateaux puisque le pignon 72 est emprisonné entre deux rondelles 60 qui sont de diamètre supérieur à la largeur des lumière 68, 70 et qui sont bloquées axialement entre un épaulement supérieur de la colonne 66 et une vis 62.

Les trois colonnes 52, 66 étant disposées sensiblement à 120 degrés l'une de l'autre autour de l'axe A1, la roue de guidage 24 se trouve parfaitement maintenue par rapport à la roue de support, les plateaux ne pouvant pas se mouvoir autrement qu'en rotation autour de l'axe A1. Bien entendu, cette possibilité de rotation autour de l'axe A1 est bloquée dès que le pignon 72 est lui-même immobilisé en rotation autour de son axe A2.

Ainsi, grâce à la roue de guidage 24 selon l'invention, les récipients sont parfaitement maintenus radialement vers l'intérieur et tangentiellement par rapport à l'axe A1.

Toutefois, dans le dispositif de transfert qui est ici décrit, il n'est pas prévu que la roue de guidage 24 agrippe les récipients, bien que cela serait éventuellement possible en prévoyant un dessin approprié des alvéoles 28. Aussi, dans l'exemple illustré, il est prévu une couronne inférieure de guidage 26 qui est prévue pour coopérer avec le fond des récipients pour les empêcher de s'écarter radialement vers l'extérieur. Pour cela la roue inférieure 26 comporte une couronne 78 qui présente une surface de contact 80 conique, évasée vers le haut à la manière d'un entonnoir. Bien entendu, la couronne 78 ne s'étend pas sur un cercle complet mais uniquement sur un arc de cercle qui correspond à l'arc de cercle sur lequel s'étend le guide supérieur 22 et qui correspond à la trajectoire des récipients sur le dispositif.

La roue de guidage 26 est susceptible d'être ajustée en hauteur pour que la surface de contact 80 vienne en appui sont le fond des récipients. Ainsi, grâce à la conicité de la surface de contact 80 la couronne 78 s'adapte, par le simple jeu du réglage en hauteur, à tous les diamètres de bouteilles et à toutes les formes de fond de bouteilles.

Le réglage en hauteur de la roue inférieure 26 est effectué de manière très simple. En effet, la roue 26 est montée par un moyeu central 82 sur le fût axial 84 à l'intérieur duquel est guidé l'arbre principal 18. Le fût 84 est fixe et solidaire du bâti de la machine. Sa surface externe comporte un filetage 86 sur lequel le moyeu 82 est vissé. Le moyeu 82 comporte en outre une poulie 88 sur laquelle une courroie (non représentée) est destinée à être enroulée pour en assurer l'entraînement en rotation. Ainsi, en commandant la rotation du moyeu, on peut provoquer un déplacement vertical de l'ensemble de la roue inférieure 26 le long du filetage 86.

Le moyeu 82 est libre en rotation par rapport à la couronne 78 de manière que le réglage en hauteur de la roue inférieure 26 n'ait pas d'influence sur la position angulaire de la couronne 78. On notera que la couronne 78 est fixe lors du fonctionnement du dispositif de transfert. Aussi, il est préférable que la surface de contact 80 soit réalisée en un matériau à faible coefficient de frottement pour ne pas rayer le fond des récipients qui seront amenés à frotter sur cette surface lors de leur transfert sur le dispositif 10.

La courroie d'entraînement peut être directement entraînée par un moteur électrique spécialement dédié au réglage en hauteur de la roue inférieure 26 de ce dispositif. Toutefois, dans une installation qui comprend plusieurs dispositifs de transfert analogues à celui qui vient d'être décrit, on peut prévoir qu'un seul et même moteur assure le réglage en hauteur de toutes les roues inférieures de guidage. Les différents moyeux seront alors entraînés soit par un jeu de courroies en cascade, soit par une courroie unique dont la trajectoire s'enroule autour de plusieurs moyeux.

Le dispositif de transfert selon l'invention est donc particulièrement avantageux par la facilité de réglage des moyens de guidage des récipients, ce réglage permettant d'assurer une grande fiabilité du transfert avec un nombre minimal d'incidents.

## Revendications

1. Dispositif de transfert de récipients, du type dans lequel les récipients (12) sont transférés sur une trajectoire en arc de cercle autour d'un axe central (A1) du dispositif de transfert (10), du type dans lequel le dispositif comporte au moins une roue de support (20) et une roue de guidage (24) qui sont animées du même mouvement de rotation autour de l'axe (A1) du dispositif, et du type dans lequel la roue de guidage (24) présente, à sa périphérie, des alvéoles (28) qui sont aménagées radialement en creux par rapport à un cercle d'enveloppe externe de la roue de guidage (24), et la roue de guidage (24) comporte deux plateaux concentriques superposés (30, 32), chaque plateau étant muni d'une série de dents (34, 36) en saillie radiale vers l'extérieur, chaque dent (34, 36) comportant un bord gauche et un bord droit, en ce que chaque alvéole (28) de la roue de guidage (24) est délimitée en largeur par le bord gauche (38) d'une dent (34) d'un premier (30) des deux plateaux et par le bord droit (40) d'une dent (36) du second (32) des deux plateaux, et en ce qu'en faisant varier la position angulaire relative des deux plateaux (30, 32) autour,de leur axe (A1), on fait varier simultanément la largeur de toutes les alvéoles (28) de la roue de guidage (24) de façon à adapter la dimension des alvéoles à la dimension des récipients (12) à transférer, **caractérisé en ce que** chacune des dents (34, 36) des deux plateaux (30, 32) comporte deux tendeurs (44) qui sont disposés l'un en tête de dent, l'autre en pied de dent, et qui sont disposés le long du bord (38, 40) de la dent qui sert à délimiter une alvéole (28), et **en ce que** la roue de guidage (24) comporte une courroie (46) qui est tendue sur les tendeurs (44) de manière à suivre sensiblement le cercle d'enveloppe entre deux alvéoles (28).

2. Dispositif de transfert selon la revendication 1, **caractérisé en ce que** la courroie (46) est extensible pour s'adapter à la variation de longueur du parcours délimité par les tendeurs (44) lorsque les deux plateaux (30, 32) sont déplacés l'un par rapport à l'autre pour faire varier la largeur des alvéoles (28).

3. Dispositif de transfert selon l'une des revendications 1 ou 2, **caractérisé en ce que** les récipients (12) sont en appui sur la courroie (46).

4. Dispositif de transfert selon l'une quelconque des revendications 1 à 3, **caractérisé en ce que**, lors d'une opération de changement de largeur des alvéoles (28), les deux plateaux (30, 32) sont décalés angulairement chacun d'une même valeur angulaire selon les deux sens opposés de telle sorte que la position globale des alvéoles (28) sur la roue de guidage (24) ne varie pas.

5. Dispositif de transfert selon la revendication 4, **caractérisé en ce que** chaque plateau (30, 32) est pourvu d'une lumière (68, 70) qui s'étend en arc de cercle autour de l'axe (A1) du dispositif, les lumières (68, 70) des deux plateaux étant prévues pour être disposées axialement l'une en regard de l'autre, **en ce que** la lumière (70) d'un des deux plateaux est pourvue d'une crémaillère (76) sur son bord radial interne tandis que la lumière (68) de l'autre plateau est pourvue d'une crémaillère (74) sur son bord radial externe, et **en ce que** le dispositif comporte un pignon de commande (72) qui est engagé axialement dans les lumières (68, 70) de manière à coopérer simultanément d'un côté avec la crémaillère (76) agencée sur le bord radial interne, et de l'autre côté avec la crémaillère (74) agencée sur le bord radial externe, ce par quoi une rotation du pignon (72) autour de son axe (A2) provoque un déplacement angulaire de chacun des deux plateaux (30, 32) d'une même valeur angulaire mais selon des sens opposés autour de l'axe (A1) du dispositif (10).

6. Dispositif de transfert selon l'une quelconque des revendications précédentes, **caractérisé en ce que** la roue de support (20) est une roue qui est apte à saisir les récipients (12) au niveau de leur extrémité ouverte (14), et **en ce que** la roue de guidage (24) coopère avec le corps des récipients.

7. Dispositif de transfert selon la revendication 6, **caractérisé en ce qu'**il comporte une seconde roue de guidage (26) qui est prévue pour coopérer avec le fond des récipients (12), et **en ce que** la dite seconde roue (26) est ajustable en hauteur et comporte une surface de contact en entonnoir contre laquelle le fond des récipients (12) vient en appui radialement vers l'extérieur.

## Patentansprüche

1. Vorrichtung zur Beförderung von Behältern, von der Art, bei der die Behälter (12) auf einer kreisbogenförmigen Umlaufbahn um eine zentrale Achse (A1) der Beförderungsvorrichtung (10) befördert werden, von der Art, bei der die Vorrichtung mindestens ein Stützrad (20) und ein Führungsrad (24) aufweist, die mit der gleichen Drehbewegung um die Achse (A1) der Vorrichtung angetrieben werden, und von der Art, bei der das Führungsrad (24) an seinem Umfang Aushöhlungen (28) aufweist, die radial bezüglich eines äußeren Hüllkreises des Führungsrads (24) ausgehöhlt sind, und das Führungsrad (24) zwei übereinander liegende konzentrische Platten (30, 32) aufweist, wobei jede Platte mit einer Reihe von Zähnen (34, 36) ausgestattet ist, die radial nach außen vorstehen, wobei jeder Zahn (34, 36) einen linken Rand und einen rechten Rand aufweist, wobei jede Aushöhlung (28) des Führungsrads (24) in der Breite vom linken Rand (38) eines Zahns (34) einer ersten der beiden Platten (30) und vom rechten Rand (40) eines Zahns (36) der zweiten der beiden Platten (32) begrenzt wird, und wobei durch Veränderung der relativen Winkelstellung der beiden Platten (30, 32) um ihre Achse (A1) gleichzeitig die Breite aller Aushöhlungen (28) des Führungsrads (24) so verändert wird, dass die Abmessung der Aushöhlungen an die Abmessung der zu befördernden Behälter (12) angepasst wird, **dadurch gekennzeichnet, dass** jeder der Zähne (34, 36) der beiden Platten (30, 32) zwei Spannstifte (44) aufweist, von denen einer am Zahnkopf und der andere am Zahnfuß angeordnet ist, und die entlang des Rands (38, 40) des Zahns angeordnet sind, der zur Begrenzung einer Aushöhlung (28) dient, und dass das Führungsrad (24) einen Riemen (46) aufweist, der auf den Spannstiften (44) so gespannt ist, dass er im Wesentlichen dem Hüllkreis zwischen zwei Aushöhlungen (28) folgt.

2. Beförderungsvorrichtung nach Anspruch 1, **dadurch gekennzeichnet, dass** der Riemen (46) dehnbar ist, um sich der Längenveränderung der von den Spannstiften (44) begrenzten Strecke anzupassen, wenn die beiden Platten (30, 32) zueinander verschoben werden, um die Breite der Aushöhlungen (28) zu verändern.

3. Beförderungsvorrichtung nach einem der Ansprüche 1 oder 2, **dadurch gekennzeichnet, dass** die Behälter (12) auf dem Riemen (46) aufliegen.

4. Beförderungsvorrichtung nach einem der Ansprüche 1 bis 3, **dadurch gekennzeichnet, dass** bei einer Breitenveränderung der Aushöhlungen (28) die beiden Platten (30, 32) je gemäß den beiden entgegengesetzten Richtungen um den gleichen Winkel verschoben werden, so dass die globale Stellung der Aushöhlungen (28) auf dem Führungsrad (24) sich nicht verändert.

5. Beförderungsvorrichtung nach Anspruch 4, **dadurch gekennzeichnet, dass** jede Platte (30, 32) mit einem Schlitzloch (68, 70) versehen ist, das sich kreisbogenförmig um die Achse (A1) der Vorrichtung erstreckt, wobei die Schlitzlöcher (68, 70) der beiden Platten vorgesehen sind, um axial einander gegenüber zu liegen, dass das Schlitzloch (70) einer der beiden Platten auf seinem radial inneren Rand mit einer Zahnstange (76) versehen ist, während das Schlitzloch (68) der anderen Platte auf seinem radial äußeren Rand mit einer Zahnstange (74) versehen ist, und dass die Vorrichtung ein Antriebsritzel (72) aufweist, das axial in die Schlitzlöcher (68, 70) eingeführt ist, um gleichzeitig auf der einen Seite mit der Zahnstange (76) auf dem radial inneren Rand und auf der anderen Seite mit der Zahnstange (74) auf dem radial äußeren Rand zusammenzuwirken, wodurch eine Drehung des Ritzels (72) um seine Achse (A2) eine Winkelverschiebung jeder der beiden Platten (30, 32) um die gleiche Winkelgröße, aber in entgegengesetzter Richtung um die Achse (A1) der Vorrichtung (10) bewirkt.

6. Beförderungsvorrichtung nach einem der vorhergehenden Ansprüche, **dadurch gekennzeichnet, dass** das Stützrad (20) ein Rad ist, das die Behälter (12) in Höhe ihres offenen Endes (14) erfassen kann, und dass das Führungsrad (24) mit dem Körper der Behälter zusammenwirkt.

7. Beförderungsvorrichtung nach Anspruch 6, **dadurch gekennzeichnet, dass** sie ein zweites Führungsrad (26) aufweist, das vorgesehen ist, um mit dem Boden der Behälter (12) zusammenzuwirken, und dass das zweite Rad (26) höhenverstellbar ist und eine trichterförmige Kontaktfläche aufweist, gegen die der Boden der Behälter (12) radial nach außen in Kontakt kommt.

## Claims

1. Device for transferring containers, of the type in which the containers (12) are transferred over a circular arc-shaped path about a central axis (A1) of the transfer device (10), of the type in which the device has at least one support wheel (20) and one guide wheel (24) which are driven with the same rotational movement about the axis (A1) of the device, and of the type in which the guide wheel (24) has, at its periphery, pockets (28) which are made as radial cavities with respect to an outer shell circle of the guide wheel (24), and the guide wheel (24) has two superposed concentric plates (30, 32), each plate being provided with a series of teeth (34, 36) projecting radially outwards, each tooth (34, 36) having a left edge and a right edge, in that each pocket (28) of the guide wheel (24) is delimited in terms of width by the left edge (38) of a tooth (34) of a first (30) of the two plates and by the right edge (40) of a tooth (36) of the second (32) of the two plates, and in that, by varying the relative angular position of the two plates (30, 32) around their axis (A1), the width of all the pockets (28) of the guide wheel (24) is varied simultaneously so as to adapt the size of the pockets to the size of the containers (12) to be transferred, **characterized in that** each of the teeth (34, 36) of the two plates (30, 32) has two tensioners (44) which are arranged so that one is at the head of the tooth and the other at the foot of the tooth and which are arranged along the edge (38, 40) of the tooth which serves to delimit a pocket (28), and **in that** the guide wheel (24) has a belt (46) which is stretched on the tensioners (44) so as to substantially follow the shell circle between two pockets (28).

2. Transfer device according to Claim 1, **characterized in that** the belt (46) can be extended in order to be adapted to the variation in length of the distance delimited by the tensioners (44) when the two plates (30, 32) are moved with respect to one another in order to vary the width of the pockets (28).

3. Transfer device according to either of Claims 1 and 2, **characterized in that** the containers (12) rest against the belt (46).

4. Transfer device according to any one of Claims 1 to 3, **characterized in that**, during an operation for changing the width of the pockets (28), the two plates (30, 32) are each angularly offset by the same angular value in the two opposite directions such that the overall position of the pockets (28) on the guide wheel (24) does not vary.

5. Transfer device according to Claim 4, **characterized in that** each plate (30, 32) is provided with a slot (68, 70) which extends in a circular arc about the axis (A1) of the device, the slots (68, 70) of the two plates being intended to be arranged axially facing one another, **in that** the slot (70) of one of the two plates is provided with a rack (76) on its inner radial edge while the slot (68) of the other plate is provided with a rack (74) on its outer radial edge, and **in that** the device has a driving pinion (72) which is engaged axially in the slots (68, 70) so as to cooperate simultaneously on one side with the rack (76) arranged on the inner radial edge, and on the other side with the rack (74) arranged on the outer radial edge, which means that rotation of the pinion (72) about its axis (A2) causes an angular movement of each of the two plates (30, 32) by the same angular value but in opposite directions about the axis (A1) of the device (10).

6. Transfer device according to any one of the preceding claims, **characterized in that** the support wheel (20) is a wheel which is able to take hold of the containers (12) at their open end (14), and **in that** the guide wheel (24) cooperates with the body of the containers.

7. Transfer device according to Claim 6, **characterized in that** it has a second guide wheel (26) which is intended to cooperate with the bottom of the containers (12), and **in that** the said second wheel (26) is height-adjustable and has a funnel-shaped contact surface against which the bottom of the containers (12) bears radially outwardly.
